# EUROPEAN PATENT APPLICATION

(11) **EP 1 589 203 A2**
(43) Date of publication of application: **26.10.2005**
(21) Application number: 05425117.8
(22) Date of filing: 03.03.2005
(51) Int. Cl.: F02B 41/10

(54) **High efficiency engine device**

(30) Priority: 18.03.2004 IT MI20040525
(71) Applicant: Franco Repellini, Cesare, 26100 Cremona (IT)
(72) Inventor: Franco Repellini, Cesare, 26100 Cremona (IT)

(57) **Abstract**

Engine device comprising an endothermic rotary engine (1) mounted on a shaft (2) and a turbine (3) mounted on a different shaft (4) and operated by the exhaust gases coming from the rotary engine (1) comprising a joint (5) suitable to transmit force and thereby mechanical power between the shaft (2) of the rotary engine (1) and the shaft (4) of the turbine (3).

## Description

The present invention relates to an engine device according to the preamble of the principal claim.

The internal combustion rotary engine, known by the name of Wankel engine, has numerous advantages with respect to the more traditional reciprocating engines. The advantages may be summed up in greater power per unit of weight, a reduced level of vibrations due to the absence of pistons that move with alternating motion, a lower number of parts, the capacity to reach a high number of revolutions per unit of time. Against these advantages, the rotary engine has nonetheless always had low efficiencies due to the absence of a combustion chamber with moving piston, which on the contrary allows alternating engines to take advantage of the expansion of the combustion gases to produce useful output.

The object of the present invention is therefore to produce an engine device comprising a rotary engine, which combines the advantage of having a high efficiency with the advantages of the rotary engine.

Said object is obtained by an engine device, the inventive characteristics of which are set forth in the claims.

The invention shall be better understood from the following detailed description, provided purely as a non-limiting example of a preferred embodiment illustrated in the accompanying drawing, wherein the sole figure shows an overall view of the engine device of the invention.

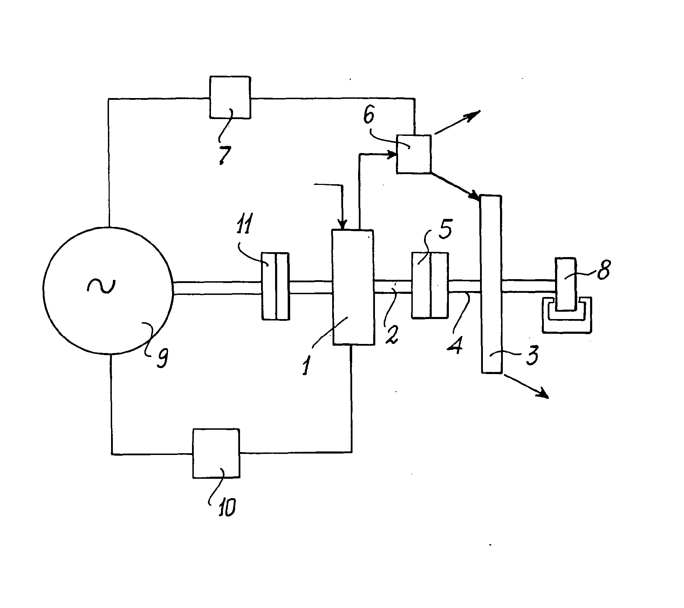

With reference to figure 1, the engine device of the invention comprises an endothermic rotary engine 1, for example a Wankel engine, comprising one or more rotors, mounted on the shaft 2, a turbine 3, comprising one or more impellers, mounted on a different shaft 4, a joint 5 between the shaft 2 of the rotary engine 1 and the shaft 4 of the turbine 3 suitable to transmit force, a valve 6 suitable to regulate input to the turbine 3 of the exhaust gases coming from the rotary engine 1, a control system 7 suitable to operate the valve 6 as a function of the conditions of the load 9, a brake 8 suitable to stop motion of the turbine 3, a regulation system 10 of the fuel flow rate as a function of the load 9, a joint 11 connecting the load 9 and the shaft 2 of the rotary engine 1.

The joint 5 between the shaft 2 of the rotary engine 1 and the shaft 4 of the turbine 3 advantageously comprises an overrunning joint connected in such a way as to allow free rotation of the shaft 2 on which the rotary engine 1 is mounted, while rotation of the shaft 4 on which the turbine 3 is mounted draws in rotation the shaft 2 on which the rotary engine 1 is mounted.

The valve 6 regulates input to the turbine 3 of the exhaust gases expelled from the rotary engine 1, conveying them fully to the turbine 3 or diverting them in part or totally to the outside. The valve 6 is regulated by a control system 7 which receives an input signal proportional to the load 9.

At start-up the valve 6 is regulated in such as way as to divert the exhaust gases to the outside.

After start-up, when the rotary engine 1 has reached certain speed, or when it has reached steady state, the control system 7 operates the valve 6 so that it progressively diverts the exhaust gases of the rotary engine 1 to the turbine 3, which starts to rotate until equalling the rotation speed of the rotary engine 1 and hence to take on part of the load previously sustained totally by the rotary engine 1.

At constant load 9, when the engine device is running at steady state, the exhaust gases of the rotary engine 1 are conveyed totally to the turbine 3, allowing a reduction in the flow rate of fuel to the rotary engine 1.

In the event of increase in the load 9, the regulation system 10 of the fuel flow rate increases the input of fuel to the rotary engine 1, consequently increasing the exhaust gases input to the turbine 3.

In the event of decrease in load 9, the regulation system 10 of the fuel flow rate controls a decrease in the flow rate of fuel towards the rotary engine 1; moreover, the regulation system 7 operates the valve 6 to divert part of the exhaust gases to the outside, thereby reducing the gases input to the turbine 3 and preventing an increase in the number of revolutions of the engine device. Upon reaching the new steady state condition the regulation system 7 again operates the valve 6 to send all the exhaust gases to the turbine 3, making it possible to decrease the flow rate of fuel required.

When the load is cleared and the engine device is to be stopped, the regulation system 10 shuts down the flow of fuel to the rotary engine 1 and the brake 8 stops the impeller of the turbine 3.

In place of the overrunning joint, the joint 5 may comprise a viscous joint, which thereby allows transmission of force with a slightly different angular velocity of the shaft 2 and of the shaft 4.

It is also possible for the joint 5 to comprise a clutch, possibly centrifugal, for connection of the shaft 2 and 4 only in the conditions of steady state or increase in the load, while at start-up or when there is a decrease in load the clutch is detached.

The valve 6 that conveys the exhaust gases to the turbine 3 or outside, may also be a throttle valve that always delivers the exhaust gases to the turbine 3, adjusting the input pressure to the turbine.

Thanks to the fact that the shaft 2 of the rotary engine 1 and the shaft 4 of the turbine 3 are connected so as to transmit mechanical power, the engine device as a whole has a much greater efficiency than can be obtained with a simple rotary engine, allowing the turbine 3 to take advantage of the enthalpy still held by the exhaust gases of the rotary engine 1.

The engine device described is particularly suitable to function with constant loads, for example to supply a pump for the circulation of an oil pipeline, or to operate an alternator to produce electrical power.

## Claims

1. Engine device comprising an endothermic rotary engine (1) mounted on a shaft (2) and a turbine (3) mounted on a different shaft (4) and operated by the exhaust gases coming from the rotary engine (1) **characterized in that** it comprises a joint (5) suitable to transmit force and thereby mechanical power between the shaft (4) of the turbine (3) and the shaft (2) of the rotary engine (1).

2. Engine device as claimed in the previous claim, **characterized in that** it comprises a valve (6) suitable to regulate input of the exhaust gases of the rotary engine (1) to the turbine (3), varying the flow rate and/or pressure.

3. Engine device as claimed in one or more of the previous claims, **characterized in that** said joint (5) between the shaft (4) of the turbine (3) and the shaft (2) of the rotary engine (1) comprises an overrunning joint, disposed in such a way that the rotary engine (1) can rotate freely, while the turbine (3) draws the rotary engine (1) in rotation.

4. Engine device as claimed in one or more of the previous claims, **characterized in that** said joint (5) between the shaft (4) of the turbine (3) and the shaft (2) of the rotary engine (1) comprises a viscous joint.

5. Engine device as claimed in one or more of the previous claims, **characterized in that** said joint (5) between the shaft (4) of the turbine (3) and the shaft (2) of the rotary engine (1) comprises a clutch.

6. Engine device as claimed in claim 2, **characterized in that** the aperture of said valve (6) is regulated by a control system (7) suitable to reduce the flow rate and/or the pressure of the exhaust gases input to the turbine (3) during the transients corresponding to a reduction or to an increase in load.

7. Engine device as claimed in one or more of the previous claims, **characterized in that** at constant load and at steady state the valve (6) inputs to the turbine (3) all the exhaust gas coming from the rotary engine (1).

8. Engine device as claimed in one or more of the previous claims, **characterized in that** at start-up the valve (6) fully diverts the exhaust gases to the outside.

9. Engine device as claimed in one or more of the previous claims, **characterized in that** it comprises a brake (8) suitable to stop the impeller of the turbine (3).

10. Engine device as claimed in one or more of the previous claims, **characterized in that** said rotary engine (1) comprises one or more rotors.

11. Engine device as claimed in one or more of the previous claims, **characterized in that** said turbine (3) comprises one or more impellers.

12. Engine device as claimed in one or more of the previous claims, **characterized in that** it can utilize different fuels, such as for example gas, petrol, gas oil, hydrogen.
